# EUROPÄISCHE PATENTANMELDUNG

(11) **EP 3 127 807 A1**
(43) Veröffentlichungstag der Anmeldung: **08.02.2017**
(21) Anmeldenummer: 16001679.6
(22) Anmeldetag: 30.07.2016
(51) Int. Cl.: B64C 27/18, B64C 29/00, F02C 6/20

(54) **TORUS-TURBINEN-ROTORANTRIEB FÜR HELIKOPTER/MULTIKOPTER UND FÜR FLUGZEUGE**

(30) Priorität: 04.08.2015 DE 102015010239
(71) Anmelder: Heppe, Rainer, 90419 Nürnberg (DE)
(72) Erfinder: Heppe, Rainer, 90419 Nürnberg (DE)

(57) **Zusammenfassung**

Antriebseinheit zum Antrieb von Helikoptern/Multikoptern, Turbo-Fan Flugzeugen oder anderen senkrecht startenden und landenden Luftfahrzeugen, aufweisend ein Zweistrom-Turbinen-Luftstrahltriebwerks (ZTL), in torusförmiges Turbinengehäuse (2), wobei die Antriebseinheit von dem Zweistrom-Turbinen-Luftstrahltriebwerks (ZTL) gespeist wird, bei dem der verdichtete Mantelstrom und/oder Jetabgasstrom (1) teilweise oder vollständig durch eine Druckleitungsverbindung, nach Volumen und Druck geregelt, in dem torusförmiges Turbinengehäuse (2) geleitet wird, wobei die Turbine als Radial-Turbine oder Axial-Turbine, oder eine Mischung aus beiden ausgelegt ist und das Gasfluid nach Kraftübertragung auf die Turbinenschaufeln (3) nach außen abgeführt (9) wird, wobei im Inneren des Turbinengehäuses (2) die Turbinenschaufeln (3), die an einem in der Wand des Turbinengehäuses laufenden frei rotierenden Rings (5) angebracht sind, über vorgelagerte Leitschaufeln (4) angeströmt werden, wobei der Ring (5) in seiner ersten Funktion als verbindendes Antriebselement zwischen den turbinengehäuseinneren Turbinenschaufeln (3) und dem außerhalb des Turbinengehäuses liegenden anzutreibenden Rotorkranz (6) dient und er gleichzeitig aufgrund seiner Formgebung in einer zweiten Funktion zur mechanischen und druckfesten Stabilisierung des Turbinengehäuses (2) dient.

## Beschreibung

Die Erfindung betrifft eine Anordnung zum Antrieb von Helikoptern/Multikoptern, Turbo-Fan Flugzeugen oder anderen senkrecht startenden und landenden Luftfahrzeugen, sowie deren unbemannten Varianten.

Bisherige Helikopter-Ausführungen verfügen meist über einen zentralen vertikal-axial gelagerten und von Turbinen mechanisch über eine Achse angetriebenen Hauptrotor, der jeweils zwei oder mehrere einzelne Rotorblätter aufweist, die aufgrund ihrer erforderlichen Größe starken Vibrationen und Verwindungskräften ausgesetzt sind. Diese werden über entsprechend gestaltete dämpfende Aufhängungen vertikal und horizontal vom Gehäuse zum Teil entkoppelt. Dennoch treten in der Kabine weiterhin erheblichen Schwingungen auf und das rotierende und nicht rotierende Material wird dadurch belastet. Die Blätter schwingen an der Rotorblattspitze frei und werden zur Änderung der Auftriebseigenschaften und des Vortriebs gesamtheitlich oder einzeln in ihrem Anstellwinkel über eine Taumelscheibe und über Gestänge am Rotorkopf verstellt. Richtungsänderungen sind dabei jedoch nur relativ träge möglich. Es ist ein Getriebe notwendig, um die Antriebs-Turbinenumdrehung in Rotorumdrehung umzusetzen, was ebenfalls zusätzliches Gewicht bedeutet. Zusätzlich ist als Gegenkraft zum auftretenden Drehmoment des Rumpfes gegen die Drehrichtung des Hauptrotors ein Ausgleich durch einen Heckrotor erforderlich. Dieser ist zur Drehachse des Hauptrotors vertikal um 90 Grad gekippt und erfordert eine entsprechende leistungszehrende mechanische Ankopplung an die Turbine, oder erhält einen eigenen Antrieb. Ein Heckrotor bedingt zusätzliches, nicht gewünschtes Gewicht. Da des Weiteren die Blattspitzen in der Geschwindigkeitsaddition von Rotation der Hauptrotorblätter plus der Vorwärtsbewegung des Luftfahrzeugs die Schallgeschwindigkeit wegen hoher Materialzerstörungsgefahr des Rotors nicht überschreiten sollten, liegt die erreichbare Höchstgeschwindigkeit eines Helikopters in der Praxis bei ca. 450 km/h.

Durch die US-PS 2 835 332 A ist bekannt, dass zwei gegenläufige Rotoren über einen Ring an den Blattspitzen angetrieben werden sollen, der wiederum mit einer Doppel-Ringturbine verbunden ist. Diese soll durch feststehende Verbrennungskammern (Jets) mit Gasfluid versorgt werden, die aufgrund fehlender Leitschaufeln pro Jet immer nur jeweils eine der rotierenden Turbinenschaufeln mit Gasdruck beaufschlagen können, was die Turbine ineffizient macht. Die Jets müssen über eine zentrale, axial angeordnete mechanische und hydraulische Struktur, an welcher auch der Rotor an einer Achse montiert ist, mit Treibstoffen und Betriebsmitteln versorgt und gesteuert werden, was erhebliches Mehrgewicht verursacht und den Rotor in der Kippfähigkeit einschränkt. Der Verbindungsring zwischen Turbinenblättern und Rotor ist als einfacher Zylinderabschnitt ausgebildet und liegt am Turbinengehäuse-Außenteil plan an, sodass er dem Gasdruck nur mit geeignet massiver Material-Auslegung unverformt wiederstehen kann, da er keine Klammerfunktion zum Turbinengehäuse aufweist. Das Gleiche gilt für Verformungen der Turbinengehäuseteile. Die zur Lagerung des Rings vorgesehenen Kugellager kommen bei Verformung der o.a. Teile durch Weitung des Kugellager-Spaltes in Kontakt mit dem Abgasstrom vom Turbinengehäuse und verschleißen durch zwangsläufige An-/Durchströmung schnell.

Durch die US-PS 3417 825 A ist bekannt, dass der Abgasstrom einer Gasturbine durch ein zentrales Rohr, in dem auch die gemeinsame mechanische Drehachse für einen gegenläufigen an den Rotorspitzen offenen Doppel-Rotorkranz und die zwischen den Rotoren liegende Doppel-Antriebsturbine läuft, hindurchgeleitet wird. Die Kraftübertragung des Gasfluids soll über eine Schaufelanordnung erreicht werden, die das Gasfluid -von oben betrachtet- der Drehrichtung links in eine Drehrichtung rechts an die jeweils für einen Rotor zuständige Teilturbine weiterleitet. Statoren sind nicht vorgesehen, alle Turbinenschaufeln rotieren. Aufgrund der gegenläufigen Anordnung der Turbinenschaufeln, der eingeschränkten Möglichkeiten bei der Dimensionierung der Antriebsturbinen im Verhältnis zum Rotordurchmesser, der Dimensionierung des Gasfluid-Kanals, der Schwierigkeiten bis hin zur Unmöglichkeit der notwendigen Aussteuerung der gegenläufigen Teitturbinen und Rotoren ist diese Technik in der Praxis nicht einsetzbar. Für eine Auftriebs-Rotorblattverstellung sind mechanische Steuerungselemente vorgesehen. Es soll demgemäß bekannte Hubschrauber-Rotortechnik und damit verbundenes Flugverhalten mit verstellbaren Blättern durch einen Direktturbinenantrieb mit zentraler mechanischer Achse, ohne Leitschaufeln und mit mechanischen Steuerstrukturen realisiert werden, was aber in der beschriebenen Art und Weise nicht funktioniert.

Ähnliche Einschränkungen wie bei den o.a. Patentschriften weist US-PS 3 610 555 A auf. Die Variante hierbei ist, dass bei diesem Blattspitzenantrieb das Gasfluid durch die hohlen Haupt-Rotorblätter in sehr kleine Antriebseinheiten mit eigenem Rotor geleitet werden, die im rechten Winkel zum Hauptrotor angeordnet sind und für dessen Rotation sorgen sollen. Dies verursacht jedoch insbesondere wegen der hohen zu installierenden Gasfluidliefernden Turbinenleistung ein erhebliches Mehrgewicht. Es besteht die Wahrscheinlichkeit, dass der Gesamtwirkungsgrad der Anordnung gering ist.

Für die Patentschriften DE 2007 046 299 A1, DE 907 625 B, GB 2 348 671 A, US 2006 / 0 060 693 A1, US 2009 / 0 039 206 A1 und EP 1 502 852 A1 gelten sinngemäß die oben angeführten Argumentationen. Teilweise werden dabei auch gänzlich andere Antriebsprinzipien, wie RAM-Jet-Antrieb oder offene Verpuffung, verfolgt.

Demgemäß liegt der Erfindung die Aufgabe zugrunde, mit einer oder mehreren erfindungsgemäßen Rotor-Antriebseinheiten Luftfahrzeuge in die Lage zu versetzen, senkrecht zu starten und zu landen, agil im Luftraum zu navigieren, Turbo-Fan Flugzeugen ähnliche Reisegeschwindigkeiten erreichen zu können und dabei die durch Gasturbinen oder andere Gasfluid erzeugende Funktionseinheiten generierten Kräfte durch Rotoren optimal und ohne mechanische Kraftübertragungs-Komponenten in Auftriebs-/Antriebskräfte umzuwandeln. Zusätzlich sollen Nachteile heute gebräuchlicher Rotorantriebe minimiert oder vermieden werden.

Diese Aufgabe wird bei einer Anordnung der vorgenannten Art dadurch gelöst, dass die Blätter eines Rotors nicht einzeln an einer zentralen, mechanisch angetriebenen AntriebsAchse befestigt sind, sondern die Rotorblätter an der Rotorblattspitze durch ein verbundenes Ringlager angetrieben werden. Auf der dem Rotor abgewandten Seite des Ringlagers sind Turbinenblätter angebracht, die, in einem Gehäuse laufend, den Rotorkranz antreiben. Gegenüber herkömmlichen Helikoptern wird die Manövrierfähigkeit des Luftfahrzeugs dadurch erheblich gesteigert, dass die gesamte Antriebseinheit um zwei Achsen für vorwärts/rückwärts und rechts/links geschwenkt werden kann. Für den Antrieb des Rotors ist keine mechanische Ankopplung über ein Getriebe, wie bei herkömmlichen Lösungen, an eine primäre Antriebseinheit erforderlich, da der Rotor durch die ringförmige Gasturbine betrieben wird.

Dabei ist insbesondere von Vorteil, dass die Turbine durch die Möglichkeit der gleichzeitigen Anströmung aller Turbinenschaufeln sehr effektiv arbeitet, die Antriebseinheiten für Multikopter und Flugzeuge zur Rotor-Rotationsachse schwenkbar realisiert werden können und sich damit eine hohe Manövrierfähigkeit für Luftfahrzeuge ergibt. Bei möglichst reibungsfreier Lagerung des kraftübertragenden Ringes treten keine weiteren mechanischen Reibungsverluste, unter gleichzeitig hoher Schub-Ausbeute des Gasfluids, auf. Durch eine spezielle druckangepasste Formgebung des Turbinengehäuses und im Zusammenwirken mit dem Verbindungsring wird hohe Stabilität der Antriebseinheit erreicht.

Die Erfindung ist anhand der Zeichnungen dargestellt und nachfolgend näher erläutert. Es zeigen
Fig. 1 schematischer Schnitt durch eine Antriebseinheit; Zeichnung mit innenliegendem Rotor, betrieben mit zugeführtem verdichteten Gasfluid ohne eigene Brennkammer
Fig. 2 vergrößerte Schnitt-Darstellung aus Fig. 1 des Turbinengehäuses mit dem in der Turbinengehäusewand rotierenden Verbindungsring ohne Darstellung von Leitschaufeln/dafür notwendige Durchlässe, Turbinenschaufeln und dem Rotor; exemplarische, schematische Darstellung/Positionierung der Gasauslässe nach außen
Fig. 3 schematische Querschnitt-Darstellung des Turbinengehäuses ohne Darstellung weiterer Einbauten
Fig. 4 schematische Darstellung eines Zweistrom-Turbinen-Luftstrahttriebwerks mit über eine schwenkbare Druckleitungsverbindung angekoppelte erfindungsgemäße Antriebseinheit, bei der der Rotor vereinfachend scheibenähnlich dargestellt ist
Fig. 5 schematische Darstellung eines mit zwei obenliegenden Zweistrom-Turbinen-Luftstrahltriebwerken und mit sechs (in vereinfachter Scheibenansicht) Antriebsrotor-Einheiten versehenen Luftfahrzeugs, davon zwei Einheiten fest eingebaut und vier Einheiten schwenkbar
Fig. 6 schematische Darstellung eines mit zwei untenliegenden Zweistrom-Turbinen-Luftstrahltriebwerken und mit sechs (in vereinfachter Scheibenansicht) Antriebsrotor-Einheiten versehenen Luftfahrzeugs, davon zwei Einheiten fest eingebaut und vier Einheiten schwenkbar
Fig. 7 Darstellung eines mit sechs Antriebsrotor-Einheiten versehenen Luftfahrzeugs, davon zwei Einheiten fest eingebaut und vier schwenkbare Einheiten, die für Richtungsänderungs-Manöver und Vorwärtsflug aus der horizontalen Lage verstellt sind.
Fig. 8 einen Schnitt durch eine Antriebseinheit; Zeichnung mit innenliegendem Rotor, betrieben mit zugeführtem verdichteten Gasfluid ohne eigene Brennkammer
Fig. 9 vergrößerte Darstellung aus Fig. 8 der Turbinenschaufel-/Rotorkranz-Verbindung; ein Profil des Verbindungsrings als Beispiel eines Ring-Querschnitts
Fig. 10 einen Multikopter mit verstellten Antriebseinheiten im Vorwärtsflug (Ansicht von schräg vorn)
Fig. 11 einen Multikopter mit verstellten Antriebseinheiten im Vorwärtsflug (Ansicht von schräg hinten)
Fig. 12 eine Antriebseinheit verbunden mit einem modifizierten Zweistrom-Turbinen-Luftstrahltriebwerk (ZTL), das durch Wärmetauscher das Volumen und den Druck des Mantelstroms erhöht.

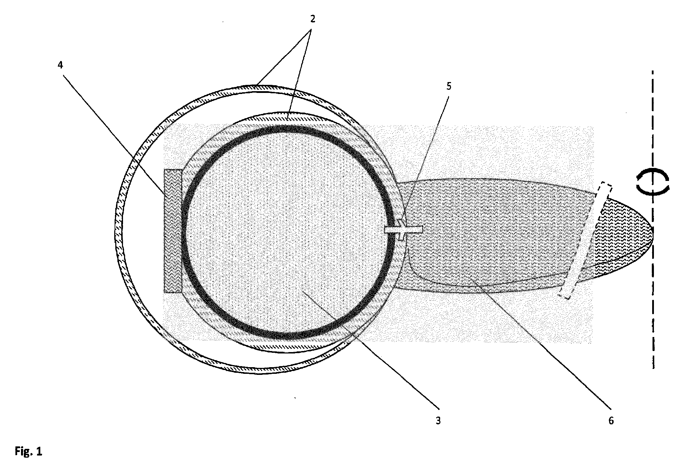

Fig. 1 zeigt den Schnitt durch eine Antriebseinheit mit der angedeuteten Strömungsrichtung (1) des eingeleiteten verdichteten Mantelstroms und/oder Jetabgasstroms eines Zweistrom-Turbinen-Luftstrahl-Triebwerks (ZTL) oder einer anderen Gasfluid liefernden Funktionseinheit. Die Antriebseinheit besteht aus der Torus-Turbine (2), (3), (4) und dem in der Wand des Turbinengehäuses laufenden frei rotierenden Rings (5), sowie dem anzutreibenden Rotorkranz (6). In schematischer Darstellung sind ferner gezeigt: Die Turbinenleitschaufeln (4) und die Arbeitsschaufeln (3).

Für die Anbringung des Rotorkranzes sind grundsätzlich zwei Varianten möglich, die eine jeweils spezifische Bauform der Torus-Turbine erfordern:
a) Außenliegende Torus-Turbine: Der Antrieb für den Rotor erfolgt wie in Fig. 1-7 dargestellt über einen an den Rotorblattspitzen angebrachten Antriebsring, an dem außenseitig die Turbinenblätter für den Antrieb befestigt sind.
b) Innenliegende Torus-Turbine: Der Antrieb für den Rotor erfolgt über einen an den Rotorblattwurzeln angebrachten Antriebsring. Bei dieser Variante schwingen die Rotorblätter wie bei heutigen Helikoptern an der Blattspitze frei. Diese Variante ist nicht abgebildet.

Bei einer erfindungsgemäßen Antriebseinheit mit Auftriebs-/Antriebs-Rotor, wobei die einzelnen Komponenten wie vorbeschrieben ausgebildet sind, wird folgende Wirkungsweise ermöglicht. Der eingeleitete verdichtete Mantelstrom und/oder Jetabgasstrom (1) eines Zweistrom-Turbinen-Luftstrahl-Triebwerks (ZTL) oder einer anderen Gasfluid liefernden Funktionseinheit strömt im Inneren des Turbinengehäuses (2) die Turbinenschaufeln (3) über vorgelagerte Leitschaufeln (4) an, die an einem in der Wand des Turbinengehäuses laufenden frei rotierenden Rings (5) angebracht sind. Dieser dient in seiner ersten Funktion als verbindendes Antriebselement zwischen den turbinengehäuseinneren Turbinenschaufeln (3) und dem außerhalb des Turbinengehäuses liegenden anzutreibenden Rotorkranz (6). Die Turbinenschaufeln (3) nehmen beim Durchströmen die Energie des Gasfluids auf und versetzen die Teile (3), (5) und (6) in Rotation, womit der gewünschte Auftrieb/Vortrieb erreicht wird. Es sind somit keine weiteren mechanischen Ankopplungen zur Kraftübertragung zwischen den rotierenden Teilen (3), (5) und (6), wie z.B. durch ein Getriebe oder eine zentrale mechanische Antriebsachse und der primären Gasfluid liefernden Antriebseinheit erforderlich. Bei Zuführung von ausschließlich unverbranntem Gasfluid kann durch Einspritzung von Brennstoff und Zündung in einem den Leitschaufeln (4) vorgelagerten Brennraum zusätzliches Gasvolumen erzeugt werden. Der Rotor dreht bei der erfindungsgemäßen Anordnung, wie unter a) beschrieben, erheblich schneller, als dieses bei Stand der Technik üblichen zentralen Helikopterrotoren möglich ist, womit hoher Luftdurchsatz und damit eine Steigerung des Auftriebeffekts bei gleichem Rotordurchmesser möglich wird. Gegenüber etablierten Helikopterrotoren entfällt bei den am Ring (5) geführten Blattspitzen und den kleineren Rotordurchmessern die schwingungs- und drehmomentbedingte nach Stand der Technik üblichen Begrenzung der Rotorblattanzahl, was den Rotor stabilisiert und den Wirkungsgrad ebenfalls erhöht. Durch Wegfall der bei etablierten Helikopterrotoren notwendigen Taumelscheibenfunktion ist bei der erfindungsgemäßen Anordnung das Rotorprofil, auf den höchst möglichen Luftdurchsatz optimierbar, und durch die gegenüber dem Helikopterkörper seitliche Anordnung der Rotoren kann die Rotorabluft ohne Auftreffen auf Helikopter-Gehäuseteile frei abströmen, was gegenüber der Lösung mit zentralem Rotor Auftriebsvorteile bringt. Eine Drehzahlsteuerung wird durch Regulierung des Gasfluid-Volumens vor Einströmung in das Gehäuse erreicht. Des Weiteren können mit der erfindungsgemäßen Antriebseinheit die nahe der zentralen geometrischen Drehachse befindlichen Treibstoff- und Betriebsmittel-Versorgungsstrukturen, wie sie teilweise in dem weiter oben diskutierten Stand der Technik notwendig sind, entfallen. Gleichzeitig dient, in einer zweiten Funktion, der Ring (5) aufgrund seiner Formgebung der mechanischen und druckfesten Stabilisierung des Turbinengehäuses (2).

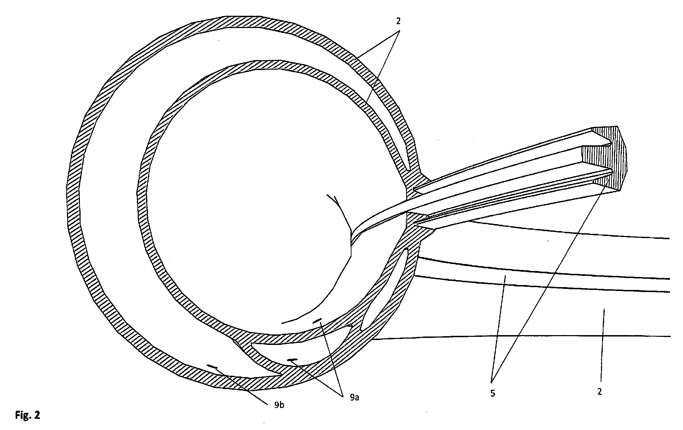

Fig. 2 zeigt Details des in Fig. 1 dargestellten Schnittes durch das Turbinengehäuse (2) und den Verbindungsring (5). Hier wird insbesondere schematisch gezeigt, dass durch die Formgebung des Verbindungsringes (5) zum einen der Kraftschluss zwischen den Turbinenschaufeln (3) und den angetriebenen Rotorblättern (6) hergestellt wird und zusätzlich das Turbinengehäuse (2) in das Profil des Verbindungsrings (5) greift und es dadurch mechanisch und druckfest stabilisiert. Weiter sind schematisch Auslassöffnungen (9a, 9b) für das Gasfluid im Turbinengehäuse (2) dargestellt. Andere Teile oder Gehäusedurchlässe sind nicht dargestellt.

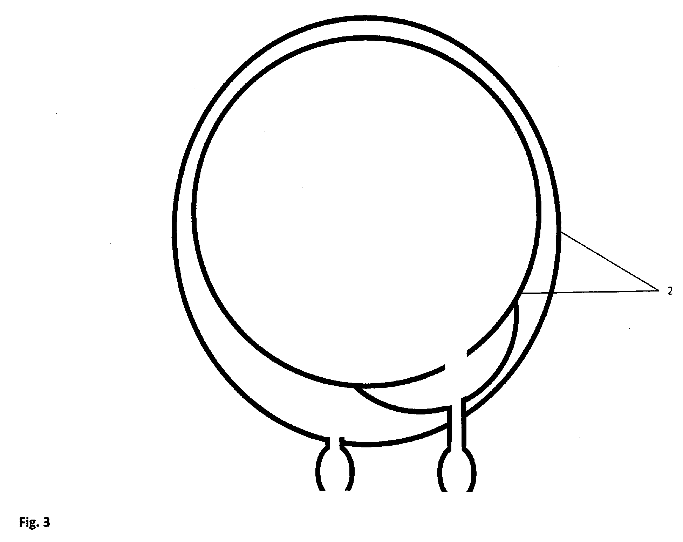

Fig. 3 zeigt schematisch einen Schnitt durch das Turbinengehäuse (2). Andere Teile oder Gehäusedurchlässe und Gehäuseschnittstellen zu weiteren Antriebskomponenten sind nicht dargestellt.

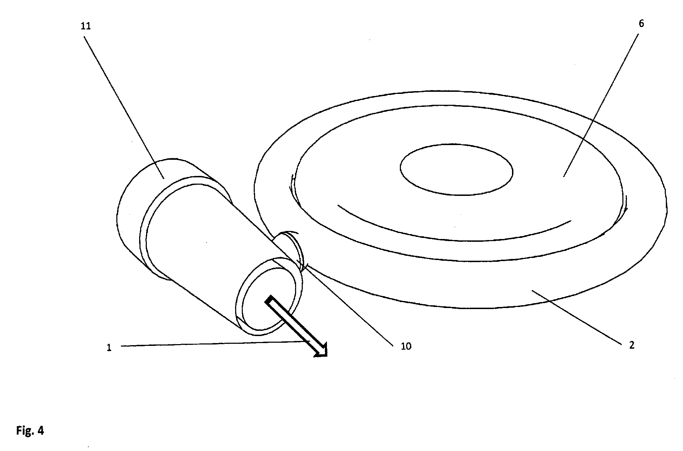

Fig. 4 zeigt eine schematische Darstellung eines Zweistrom-Turbinen-Luftstrahltriebwerks (11) mit dem Gehäuse (2) einer erfindungsgemäßen Antriebseinheit, bei der der Rotor (6) vereinfachend scheibenähnlich dargestellt ist. Die Antriebseinheit ist über eine schwenkbare Druckleitungsverbindung (10) angekoppelt.

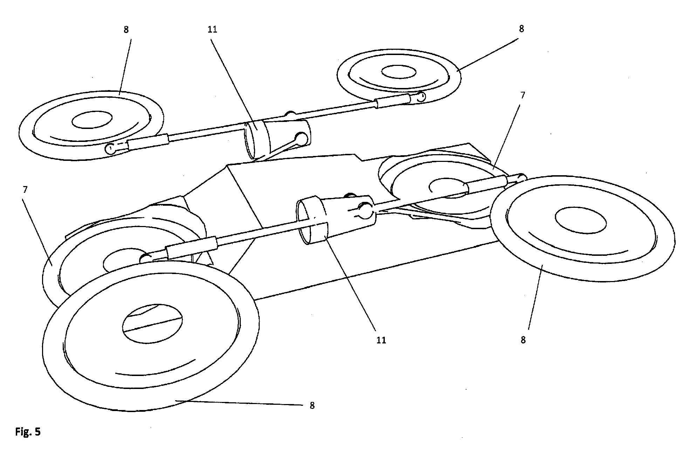

Fig. 5 zeigt eine schematische Darstellung eines mit zwei obenliegenden Zweistrom-Turbinen-Luftstrahltriebwerken und mit sechs (in vereinfachter Scheibenansicht) Antriebsrotor-Einheiten versehenen Luftfahrzeugs, davon zwei fest verbauten Einheiten (7) und vier schwenkbaren Einheiten (8). Dargestellt ist eine prinzipielle Möglichkeit der Druckleitungsverbindung zwischen ZTL (11) und Antriebseinheit (7) und (8).

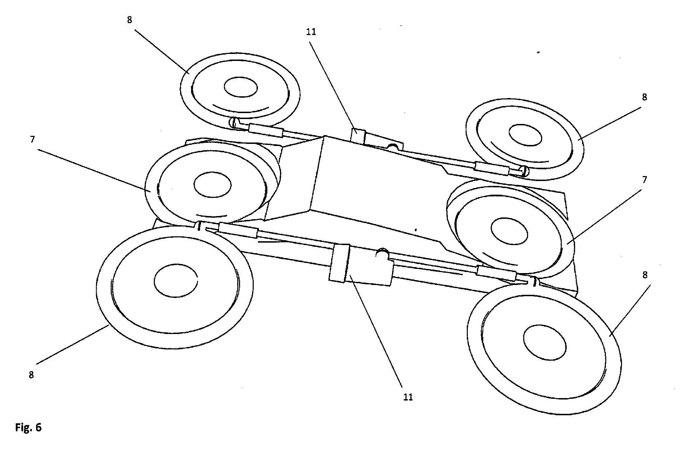

Fig. 6 zeigt eine schematische Darstellung eines mit zwei untenliegenden Zweistrom-Turbinen-Luftstrahltriebwerken und mit sechs (in vereinfachter Scheibenansicht) Antriebsrotor-Einheiten versehenen Luftfahrzeugs, davon zwei fest verbauten Einheiten (7) und vier schwenkbaren Einheiten (8). Dargestellt ist eine prinzipielle Möglichkeit der Druckleitungsverbindung zwischen ZTL (11) und Antriebseinheit (7) und (8).

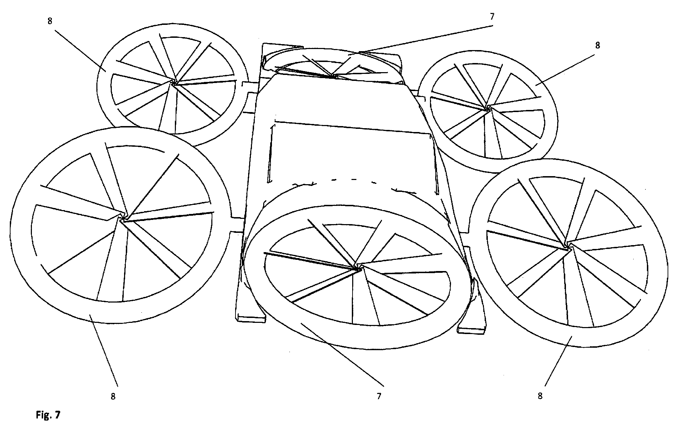

Fig. 7 zeigt eine Darstellung eines mit sechs Antriebsrotor-Einheiten versehenen Luftfahrzeugs, davon zwei fest verbauten Einheiten (7). Vier schwenkbare Einheiten (8) sind für Richtungsänderungs-Manöver und Vorwärtsflug verstellt. Nicht dargestellt sind die Zweistrom-Turbinen-Luftstrahltriebwerke.

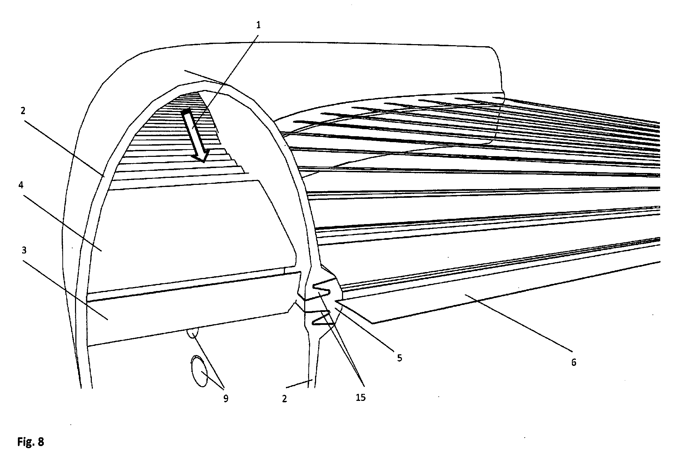

Fig. 8 zeigt den Schnitt durch eine Antriebseinheit mit der angedeuteten Strömungsrichtung (1) des eingeleiteten verdichteten Mantelstroms und/oder Jetabgasstroms eines Zweistrom-Turbinen-Luftstrahl-Triebwerks (ZTL) oder einer anderen Gasfluid liefernden Funktionseinheit. Diese besteht aus der Torus-Turbine (2), (3), (4) und dem in der Wand des Turbinengehäuses laufenden frei rotierenden Ring (5), sowie dem anzutreibenden Rotorkranz (6). In schematischer Darstellung sind ferner gezeigt: Die Gehäuseenden (15) des Turbinengehäuses (2), die Turbinenleitschaufeln (4), die Arbeitsschaufeln (3), die für die Abluft notwendigen Öffnungen (9) und in seiner zweiten Funktion der Verbindungsring (5), der zusammen mit den offenen Turbinengehäuse-Enden (15) eine druckfeste Stabilisierung und Lagerfunktion für das Turbinengehäuse (2) realisiert.

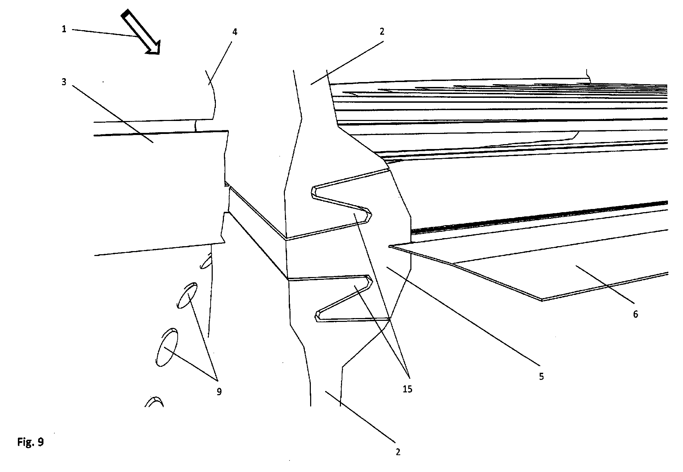

Fig. 9 zeigt Details des in Fig. 8 dargestellten Schnittes durch das Turbinengehäuse. Hier wird insbesondere schematisch gezeigt, dass durch die Formgebung des Verbindungsringes (5) zum einen der Kraftschluss zwischen den Turbinenschaufeln (3) und den angetriebenen Rotorblättern (6) hergestellt wird und zusätzlich die offenen Turbinengehäuseenden (15) in die Lager des Verbindungsrings (5) greifen. Damit wird zusätzlich Formstabilität des Gehäuses dadurch erreicht, dass bei Druckaufbau innerhalb der Turbine die Gehäuseenden (15) in die dafür vorgesehenen Nuten des Verbindungsrings gepresst werden. Der Freilauf des Rings wird durch geeignete Lagerungsmaßnahmen wie Luftlagerung, Schmiermittel oder anderes gewährleistet. Die Abluftöffnungen sind mit (9) dargestellt.

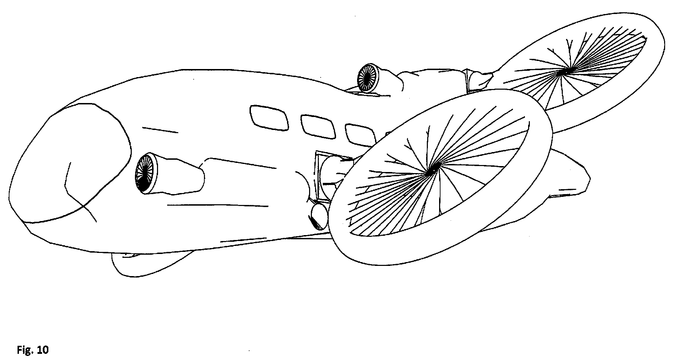

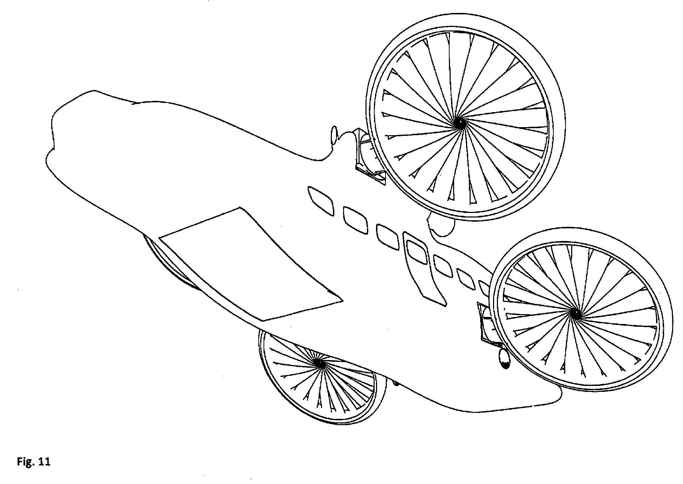

Die Fig. 10 und Fig. 11 zeigen ein Fluggerät mit vier Antriebseinheiten im Vorwärtsflug. Die in gleicher Weise um die X-Achse nach vorn gedrehten Antriebseinheiten, stellen dar, dass der hier gezeigte Multikopter durch die Drehung der Rotoren kombinierten Auftrieb und Vorwärtsschub erhält. Da die Antriebseinheiten unabhängig voneinander verstellt werden können, sind bei anderen Einstellungen auch Wendemanöver auf der Stelle, Rückwärtsflug oder Rollen um die Längsachse und Querachse möglich.

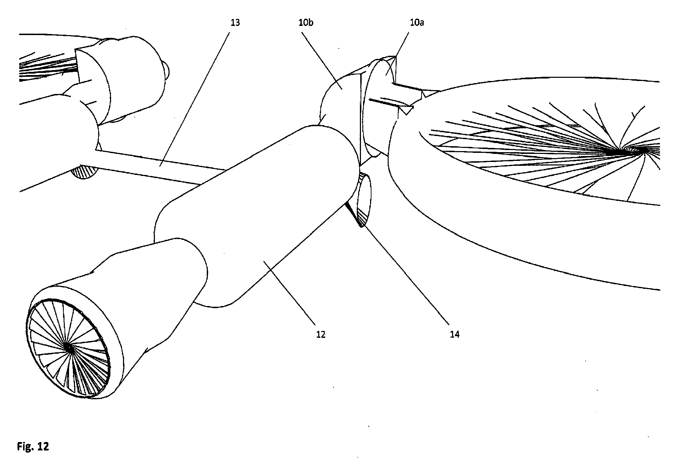

Die Fig. 12 zeigt schematisch eine Möglichkeit, die erfindungsgemäße Antriebseinheit, welche insbesondere rechts im Bild zum Teil abgebildet ist, in ihrer Stellung zum Helikopterkörper zu verdrehen (10a). Dies wird über die oben erwähnte Drehvorrichtung um die X-Achse erreicht. Eine Vorrichtung, die es möglich macht, die Antriebseinheit um 90° um die Y-Achse parallel zu Multikopter-Längsachse nach oben bis in die Senkrechte zu schwenken, ist hier auch schematisch dargestellt (10b). Damit ist eine platzsparende Parkposition des Fluggeräts am Boden realisierbar. Die Versorgung mit Gasfluid ist schematisch durch angeflanschte modifizierte Zweistrom-Turbinen-Luftstrahltriebwerke (12) dargestellt, die hier durch eine druckausgleichende Rohrverbindung (13) zwischen Steuerbord- und Backbord-Einheit verbunden sind. Ebenfalls schematisch dargestellt ist ein Abgasauslass (14) für nicht genutztes ZTL Jetstream Gasfluid.

## Patentansprüche

1. Antriebseinheit zum Antrieb von Helikoptern/Multikoptern, Turbo-Fan Flugzeugen oder anderen senkrecht startenden und landenden Luftfahrzeugen, welche von einem Zweistrom-Turbinen-Luftstrahltriebwerks (ZTL) gespeist wird, bei dem der verdichtete Mantelstrom und/oder Jetabgasstrom (1) eines Zweistrom-Turbinen-Luftstrahltriebwerks (ZTL) teilweise oder vollständig durch eine Druckleitungsverbindung, nach Volumen und Druck geregelt, in ein torusförmiges Turbinengehäuse (2) geleitet wird, wobei die Turbine als Radial-Turbine oder Axial-Turbine, oder eine Mischung aus beiden ausgelegt ist und das Gasfluid nach Kraftübertragung auf die Turbinenschaufeln (3) nach außen abgeführt (9) wird, **dadurch gekennzeichnet, dass** im Inneren des Turbinengehäuses (2) die Turbinenschaufeln (3), die an einem in der Wand des Turbinengehäuses laufenden frei rotierenden Rings (5) angebracht sind, über vorgelagerte Leitschaufeln (4) angeströmt werden, wobei der Ring (5) in seiner ersten Funktion als verbindendes Antriebselement zwischen den turbinengehäuseinneren Turbinenschaufeln (3) und dem außerhalb des Turbinengehäuses liegenden anzutreibenden Rotorkranz (6) dient und er gleichzeitig aufgrund seiner Formgebung in einer zweiten Funktion zur mechanischen und druckfesten Stabilisierung des Turbinengehäuses (2) dient.

2. Antriebseinheit nach Anspruch 1, **dadurch gekennzeichnet, dass** bei Zuführung von ausschließlich unverbranntem Gasfluid durch Einspritzung von Brennstoff und Zündung in einem dem Turbinenschaufel-Gehäusetunnel vorgelagerten Brennraum zusätzliches Gasvolumen vor Zuführung an die Turbinenschaufeln (3) erzeugt wird.

3. Antriebseinheit nach einem der vorhergehenden Ansprüche, **dadurch gekennzeichnet, dass** der Abgasstrom der Torus-Turbine über Düsen mit zusätzlichem Antriebseffekt nach außen abgeführt wird.

4. Antriebseinheit nach einem der vorhergehenden Ansprüche, **dadurch gekennzeichnet, dass** zusätzliche Düsen vorgesehen sind, die über eine ringförmige Kammer vom Mantelstrom des Zweistrom-Turbinen-Luftstrahltreibwerks gespeist werden.

5. Helikopter/Multikopter, Turbo-Fan Flugzeug oder anderes senkrecht startendes und landendes Luftfahrzeug mit mindestens einer Antriebseinheit nach einem der vorhergehenden Ansprüche und einem Zweistrom-Turbinen-Luftstrahltriebwerk (ZTL)

6. Helikopter/Multikopter, Turbo-Fan Flugzeug oder anderes senkrecht startendes und landendes Luftfahrzeug nach Anspruch 5, wobei die Antriebseinheit um zwei Achsen für vorwärts/rückwärts und rechts/links geschwenkt werden kann.

7. Helikopter/Multikopter, Turbo-Fan Flugzeug oder anderes senkrecht startendes und landendes Luftfahrzeug nach Anspruch 6, wobei die Antriebseinheit um 90 Grad in eine Parkposition mit liegender Antriebsachse bringbar ist.

8. Helikopter/Multikopter, Turbo-Fan Flugzeug oder anderes senkrecht startendes und landendes Luftfahrzeug nach einem der Ansprüche 5 bis 7, wobei für den Antrieb des Rotorkranzes (6) keine weitere mechanische Ankopplung erforderlich ist.
